# EUROPEAN PATENT SPECIFICATION

(11) **EP 3 297 365 B1**
(45) Date of publication and mention of the grant of the patent: **07.08.2019**
(21) Application number: 16806797.3
(22) Date of filing: 07.06.2016
(51) Int. Cl.: H04L 5/00, H04W 72/04

(54) **CARRIER AGGREGATION METHOD USING SUBFRAME OFFSET AND BASE STATION**
VERFAHREN ZUR TRÄGERAGGREGATION UNTER VERWENDUNG VON UNTERRAHMENVERSATZ UND ENTSPRECHENDE BASISSTATION
PROCÉDÉ D'AGRÉGATION DE PORTEUSES UTILISANT UN DÉCALAGE DE SOUS-TRÂME ET STATION DE BASE CORRESPONDANTE

(30) Priority: 11.06.2015 CN 201510319680
(43) Date of publication of application: 21.03.2018
(73) Proprietor: Huawei Technologies Co., Ltd., Longgang District Shenzhen, Guangdong 518129 (CN)
(72) Inventor: ZHAO, Nan, Shenzhen Guangdong 518129 (CN); CHENG, Zhulin, Shenzhen Guangdong 518129 (CN)
(74) Representative: Goddar, Heinz J.
(86) International application number: PCT/CN2016/085027
(87) International publication number: WO 2016/197899

(56) References cited:
- EP-A1- 2 741 553
- WO-A1-2015/045270
- WO-A1-2015/050817
- CN-A- 101 651 523
- CN-A- 102 685 891
- CN-A- 102 685 897
- US-A1- 2014 369 242
- HUAWEI; ET AL.: 'Periodic CQI/PMI/RI reporting for CA' 3GPP TSG RAN WG1 MEETING #63, R1-105833 19 November 2010, XP050466688

## Description

### TECHNICAL FIELD

Embodiments of the present invention relate to communications technologies, and in particular, to a subframe offset-based carrier aggregation method and a base station.

### BACKGROUND

In an evolution process from a Long Term Evolution (Long Term Evolution Advanced, LTE for short) system to a Long Term Evolution Advanced (Long Term Evolution Advanced, LTE-A for short) system, a requirement for a wider spectrum is exactly the most significant factor that affects evolution. Therefore, a carrier aggregation (Carrier Aggregation, CA for short) technology is proposed in the 3rd Generation Partnership Project (3rd Generation Partnership Project, 3GPP for short). In CA, multiple contiguous or non-contiguous carriers are aggregated to obtain larger bandwidth.

The patent application US 2014/369242 A1 (NG BOON LOONG ET AL, 18 December 2014) describes the principles of carrier aggregation technology.

In an LTE-A time division duplex (Division Duplexing Time, TDD for short) system, a same subframe ratio or different subframe ratios may be used for multiple carriers to be aggregated. Considering that in most services, there are more downlink services than uplink services, there is a smaller quantity of uplink subframes in a commonly-used subframe ratio. After carrier aggregation, uplink subframes of multiple carriers may overlap. Overlapping of the uplink subframes herein means that the multiple carriers are all used for uplink transmission in a same timeslot. When both an uplink service and a downlink service increase, a secondary component carrier may be added to increase a system capacity. However, adding the secondary component carrier cannot bring a remarkable benefit to a user at a relatively far point. The user at the relatively far point is relative to a center user. Limited by transmit power of the user at the relatively far point, the user at the relatively far point cannot send data by using uplink subframes of two carriers at a same moment. Therefore, if uplink subframes overlap during carrier aggregation, the user at the relatively far point cannot obtain a benefit of radio resource increment brought by carrier aggregation.

### SUMMARY

Embodiments of the present invention provide a subframe offset-based carrier aggregation method and a base station. Uplink subframes of carriers in carrier aggregation are staggered by means of subframe offset, so that a user at a relatively far point can obtain a gain brought by the carrier aggregation, and coverage is enhanced and a capacity is enlarged.

Aspects of the present invention are provided in the independent claims. Preferred embodiments are provided in the dependent claims.

The present invention is defined by the appended claims and limited only by their scope. Any embodiment and/or aspect (of the invention and/or disclosure) referred to in this description and not fully falling within the scope of said appended claims is to be interpreted as an example useful for understanding the present invention.

A first aspect of the present invention provides a subframe offset-based carrier aggregation method, including:
determining, by a base station, to add a secondary component carrier;
determining, by the base station, to offset a subframe of the secondary component carrier, and determining a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1; and
configuring, by the base station, the secondary component carrier for each UE in a first UE set within a coverage area of the base station, and sending configuration information to each UE in the first UE set, where the configuration information includes: a frequency of the secondary component carrier, the subframe ratio of the secondary component carrier, and the subframe offset amount of the secondary component carrier.

With reference to the first aspect, in a first possible implementation of the first aspect, the method further includes:
determining, by the base station according to an uplink traffic volume and/or a downlink traffic volume, to adjust the subframe offset amount of the secondary component carrier;
determining, by the base station, a subframe offset amount by which the secondary component carrier is to be adjusted;
sending, by the base station, a configuration delete instruction for the secondary component carrier to each UE in the first UE set, where the configuration delete instruction is used to instruct each UE in the first UE set to delete configuration of the secondary component carrier;
handing over, by the base station, UE that is in a third UE set and that camps on the secondary component carrier to another carrier, where the UE in the third UE set is UE that uses the secondary component carrier as a primary component carrier;
re-configuring, by the base station, the secondary component carrier for each UE in the first UE set according to the subframe offset amount by which the secondary component carrier is to be adjusted, and sending updated carrier information to each UE in the first UE set and each UE in the third UE set, where the updated carrier information includes: the frequency of the secondary component carrier, the subframe ratio of the secondary component carrier, and the subframe offset amount by which the secondary component carrier is to be adjusted;
receiving, by the base station, a measurement result that is about the secondary component carrier and that is sent by each UE in the third UE set, where the measurement result about the secondary component carrier is obtained by each UE in the third UE set by performing measurement according to the updated carrier information; and
determining, by the base station according to the measurement result that is about the secondary component carrier and that is sent by each UE in the third UE set, whether to hand over each UE in the third UE set from the another carrier to the secondary component carrier, and handing over UE that is in the third UE set and that needs to be handed over to the secondary component carrier.

With reference to the first aspect or the first possible implementation of the first aspect, in a second possible implementation of the first aspect, the method further includes:
determining, by the base station, carriers that have been activated by first UE, where the first UE is any UE in the first UE set;
determining, by the base station from the activated carriers, bundled subframes of at least two carries used for bundled transmission, where the bundled subframes are consecutive subframes of the at least two carriers used for the bundled transmission, and the bundled subframes are used for transmitting same data; and
sending, by the base station, configuration information of the bundled transmission to the first UE, so that the first UE performs the bundled transmission according to the configuration information of the bundled transmission, where the configuration information of the bundled transmission includes: the at least two carriers used for the bundled transmission, a resource block that is in the at least two carriers used for the bundled transmission and that is used in the bundled transmission, sequence numbers of the bundled subframes, and a scheduling manner of the bundled transmission.

With reference to the first aspect, in a third possible implementation of the first aspect, before the configuring, by the base station, the secondary component carrier for each UE in a first user equipment UE set within a coverage area of the base station, the method further includes:
broadcasting, by the base station, the frequency, the subframe ratio, and the subframe offset amount of the secondary component carrier to all UEs within the coverage area of the base station by using the secondary component carrier;
determining, by the base station, a second UE set from all the UEs according to a preset selection condition, and sending a measurement instruction to each UE in the second UE set, where the measurement instruction is used to instruct each UE in the second UE set to measure the secondary component carrier;
receiving, by the base station, a measurement result that is about the secondary component carrier and that is returned by each UE in the second UE set; and
determining, by the base station from the second UE set according to the measurement result that is about the secondary component carrier and that is returned by each UE in the second UE set, UE whose measurement result meets a preset condition, and forming the first UE set by using the UE whose measurement result meets the preset condition.

With reference to the first aspect, in a fourth possible implementation of the first aspect, the subframe offset amount of the secondary component carrier is the same as a subframe offset amount of another secondary component carrier of the primary component carrier.

With reference to the first aspect, in a fifth possible implementation of the first aspect, the subframe offset amount of the secondary component carrier is different from a subframe offset amount of another secondary component carrier of the primary component carrier.

With reference to the first aspect, in a sixth possible implementation of the first aspect, the subframe ratio of the secondary component carrier is the same as the subframe ratio of the primary component carrier and a subframe ratio of another secondary component carrier of the primary component carrier.

With reference to the first aspect, in a seventh possible implementation of the first aspect, the subframe ratio of the secondary component carrier is different from the subframe ratio of the primary component carrier and a subframe ratio of another secondary component carrier of the primary component carrier.

A second aspect of the present invention provides a base station, including:
a determining module, configured to determine to add a secondary component carrier, where
the determining module is further configured to: determine to offset a subframe of the secondary component carrier, and determine a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1;
a configuration module, configured to configure the secondary component carrier for each UE in a first user equipment UE set within a coverage area of the base station; and
a sending module, configured to send configuration information to each UE in the first UE set, where the configuration information includes: a frequency of the secondary component carrier, the subframe ratio of the secondary component carrier, and the subframe offset amount of the secondary component carrier.

With reference to the second aspect, in a first possible implementation of the second aspect, the determining module is further configured to:
determine, according to an uplink traffic volume and/or a downlink traffic volume, to adjust the subframe offset amount of the secondary component carrier; and
determine a subframe offset amount by which the secondary component carrier is to be adjusted;
the sending module is further configured to send a configuration delete instruction for the secondary component carrier to each UE in the first UE set, where the configuration delete instruction is used to instruct each UE in the first UE set to delete configuration of the secondary component carrier;
the base station further includes a handover module, configured to hand over UE that is in a third UE set and that camps on the secondary component carrier to another carrier, where the UE in the third UE set is UE that uses the secondary component carrier as a primary component carrier;
the configuration module is further configured to re-configure the secondary component carrier for each UE in the first UE set according to the subframe offset amount by which the secondary component carrier is to be adjusted;
the sending module is further configured to send updated carrier information to each UE in the first UE set and each UE in the third UE set, where the updated carrier information includes: the frequency of the secondary component carrier, the subframe ratio of the secondary component carrier, and the subframe offset amount by which the secondary component carrier is to be adjusted;
the base station further includes: a receiving module, configured to receive a measurement result that is about the secondary component carrier and that is sent by each UE in the third UE set, where the measurement result about the secondary component carrier is obtained by each UE in the third UE set by performing measurement according to the updated carrier information; and
the handover module is further configured to: determine, according to the measurement result that is about the secondary component carrier and that is sent by each UE in the third UE set, whether to hand over each UE in the third UE set from the another carrier to the secondary component carrier, and hand over UE that is in the third UE set and that needs to be handed over to the secondary component carrier.

With reference to the second aspect or the first possible implementation of the second aspect, in a second possible implementation of the second aspect, the determining module is further configured to:
determine carriers that have been activated by first UE, where the first UE is any UE in the first UE set; and
determine, from the activated carriers, bundled subframes of at least two carries used for bundled transmission, where the bundled subframes are consecutive subframes of the at least two carriers used for the bundled transmission, and the bundled subframes are used for transmitting same data; and
the sending module is further configured to send configuration information of the bundled transmission to the first UE, so that the first UE performs the bundled transmission according to the configuration information of the bundled transmission, where the configuration information of the bundled transmission includes: the at least two carriers used for the bundled transmission, a resource block that is in the at least two carriers used for the bundled transmission and that is used in the bundled transmission, sequence numbers of the bundled subframes, and a scheduling manner of the bundled transmission.

With reference to the second aspect, in a third possible implementation of the second aspect, the sending module is further configured to:
before the configuration module configures the secondary component carrier for each UE in the first UE set within the coverage area of the base station, broadcast the frequency, the subframe ratio, and the subframe offset amount of the secondary component carrier to all UEs within the coverage area of the base station by using the secondary component carrier;
the determining module is further configured to determine a second UE set from all the UEs according to a preset selection condition;
the sending module is further configured to send a measurement instruction to each UE in the second UE set, where the measurement instruction is used to instruct each UE in the second UE set to measure the secondary component carrier;
the base station further includes:
   a receiving module, configured to receive a measurement result that is about the secondary component carrier and that is returned by each UE in the second UE set; and
   the determining module is further configured to: determine, from the second UE set according to the measurement result that is about the secondary component carrier and that is returned by each UE in the second UE set, UE whose measurement result meets a preset condition, and form the first UE set by using the UE whose measurement result meets the preset condition.

With reference to the second aspect, in a fourth possible implementation of the second aspect, the subframe offset amount of the secondary component carrier is the same as a subframe offset amount of another secondary component carrier of the primary component carrier.

With reference to the second aspect, in a fifth possible implementation of the second aspect, the subframe offset amount of the secondary component carrier is different from a subframe offset amount of another secondary component carrier of the primary component carrier.

With reference to the second aspect, in a sixth possible implementation of the second aspect, the subframe ratio of the secondary component carrier is the same as the subframe ratio of the primary component carrier and a subframe ratio of another secondary component carrier of the primary component carrier.

With reference to the second aspect, in a seventh possible implementation of the second aspect, the subframe ratio of the secondary component carrier is different from the subframe ratio of the primary component carrier and a subframe ratio of another secondary component carrier of the primary component carrier.

According to the subframe offset-based carrier aggregation method and the base station that are provided in the embodiments of the present invention, the base station determines to offset a subframe of a newly added secondary component carrier; determines a subframe offset amount relative to a primary component carrier for the secondary component carrier; then configures the secondary component carrier for each UE in a first UE set within a coverage area of the base station; and sends configuration information to each UE in the first UE set. The configuration information includes: a frequency of the secondary component carrier, a subframe ratio of the secondary component carrier, and the subframe offset amount of the secondary component carrier. In this method, the subframe offset amount is set for the secondary component carrier, so that uplink subframes of the secondary component carrier and the primary component carrier can be staggered, or uplink subframes of the secondary component carrier and another carrier can be staggered. Therefore, a user at a relatively far point who supports carrier aggregation can use uplink subframes on different carriers, and the user at the relatively far point can obtain a gain brought by the carrier aggregation, so that coverage is enhanced and a capacity is enlarged.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments. The scope of the present invention is determined only by the scope of the appended claims.
FIG. 1 is a flowchart of a subframe offset-based carrier aggregation method according to Embodiment 1 of the present invention;
FIG. 2 is a subframe pattern obtained after subframes of carriers with a same subframe ratio are offset;
FIG. 3 is another subframe pattern obtained after subframes of carriers with a same subframe ratio are offset;
FIG. 4 is a subframe pattern obtained after subframes of carriers with different subframe ratios are offset;
FIG. 5 is another subframe pattern obtained after subframes of carriers with different subframe ratios are offset;
FIG. 6 is still another subframe pattern obtained after subframes of carriers with different subframe ratios are offset;
FIG. 7 is a subframe pattern obtained after subframes of both a TDD carrier and an FDD carrier are offset;
FIG. 8 is a flowchart of a subframe offset-based carrier aggregation method according to Embodiment 2 of the present invention;
FIG. 9 is a flowchart of a subframe offset-based carrier aggregation method according to Embodiment 3 of the present invention;
FIG. 10 is still another subframe pattern obtained after subframes of carriers with a same subframe ratio are offset;
FIG. 11 is a schematic structural diagram of a base station according to Embodiment 4 of the present invention;
FIG. 12 is a schematic structural diagram of a base station according to Embodiment 5 of the present invention; and
FIG. 13 is a schematic structural diagram of a base station according to Embodiment 7 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A method in the embodiments of the present invention is mainly applied to a communications system in which TDD supports carrier aggregation. For example, the method may be applied to a TDD LTE-A system, or a system evolved based on TDD LTE-A. A carrier aggregation cell usually includes one primary component carrier and at least one secondary component carrier. In the prior art, uplink subframes of multiple carriers to be aggregated may overlap. When both an uplink service and a downlink service increase, a secondary component carrier may be added to increase a system capacity. However, adding the secondary component carrier cannot bring a remarkable benefit to a user at a relatively far point. Limited by transmit power of the user at the relatively far point, the user at the relatively far point cannot send data by using uplink subframes of two carriers at a same moment. Therefore, if uplink subframes overlap during carrier aggregation, the user at the relatively far point cannot obtain a benefit of radio resource increment brought by carrier aggregation. The user at the relatively far point is a user at a relatively large distance from a base station. For example, when a coverage area of a base station is a circle, a user at a relatively far point is a user whose distance from the base station is greater than 1/2 of a radius of the coverage area of the base station.

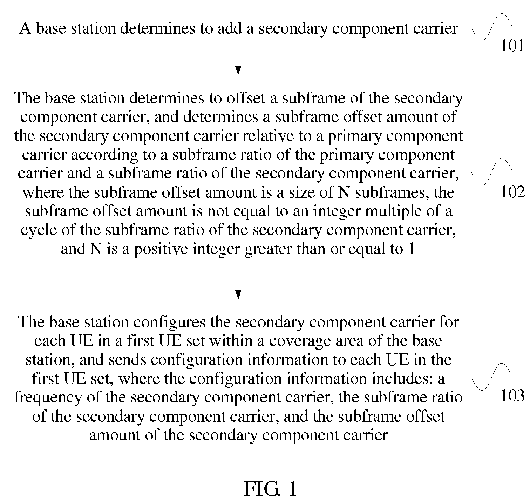

To resolve the problem in the prior art, Embodiment 1 of the present invention provides a subframe offset-based carrier aggregation method. FIG. 1 is a flowchart of the subframe offset-based carrier aggregation method according to Embodiment 1 of the present invention. As shown in FIG. 1, the method in this embodiment may include the following steps.

Step 101: A base station determines to add a secondary component carrier.

The base station may specifically determine, by using the following methods, whether to add the secondary component carrier: The base station determines that an expected uplink traffic volume in a communications system is greater than a current uplink traffic volume; or the base station determines that an expected downlink traffic volume in a communications system is greater than a current downlink traffic volume; or the base station determines that an expected uplink traffic volume in a communications system is greater than a current uplink traffic volume and an expected downlink traffic volume is also greater than a current downlink traffic volume. After determining to add the secondary component carrier, the base station further needs to select an attribute of the newly added secondary component carrier according to an attribute of a primary component carrier and an attribute of an existing secondary component carrier. For example, the base station determines a frequency of the newly added secondary component carrier according to a frequency of the primary component carrier and a frequency of the existing secondary component carrier, and selects, as the frequency of the newly added secondary component carrier, a frequency as far as possible from the frequency of the primary component carrier and the frequency of the existing secondary component carrier, to ensure isolation between carriers. In addition, the base station determines bandwidth of the newly added secondary component carrier according to the expected uplink traffic volume and/or downlink traffic volume, to meet a service requirement.

Step 102: The base station determines to offset a subframe of the secondary component carrier, and determines a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1.

When determining to offset the subframe of the secondary component carrier, the base station needs to consider any one or a combination of the following factors: (1) Whether uplink coverage of the communications system is poorer than downlink coverage. If the uplink coverage is poorer than the downlink coverage, offsetting the subframe of the secondary component carrier is considered; otherwise, the subframe is not offset. A purpose of subframe offset is mainly to enhance uplink coverage. (2) If a guard interval between any two carriers is less than a specific threshold (such as 20 MHz), the subframe cannot be offset, where the any two carriers herein may be a primary component carrier and a secondary component carrier, or may be two secondary component carriers. This is mainly because if a guard interval between two carriers is extremely small, after the subframe is offset, interference between the two carriers is relatively large when UE receives or sends data on the two carriers at the same time, and consequently, a capacity of the communications system is reduced. (3) If a quantity of user equipments (User Equipment, UE for short) in the communications system that support subframe offset is less than a specific threshold, the subframe cannot be offset. For example, if a proportion of the quantity of UEs in the communications system that support subframe offset in a total quantity of UEs is less than 5%, the subframe cannot be offset. UE reports a capability parameter of the UE to the base station. The capability parameter includes a capability supported by the UE. The base station determines, according to the capability parameter of the UE, whether the UE supports subframe offset, to count the quantity of UEs in the communications system that support subframe offset. (4) Whether an original uplink subframe and an original downlink subframe are affected after the subframe is offset. For example, if all UEs in the communications system need to perform uplink transmission or downlink receiving at the same time in some uplink subframes, this type of subframes need to be avoided during subframe offset, so as to avoid a problem that the UE cannot receive or send system information after subframe offset due to a receiving or sending capability.

After determining to offset the subframe of the secondary component carrier, the base station determines the subframe offset amount of the secondary component carrier relative to the primary component carrier according to the subframe ratio of the primary component carrier and the subframe ratio of the secondary component carrier. For TDD, uplink and downlink are separated in time, and have a same carrier frequency, that is, within each period of 10 ms, there are totally 10 available subframes in uplink and downlink, and each subframe is either an uplink subframe or a downlink subframe. In a TDD frame structure, each radio frame is first divided into two 5-ms half-frames, and the radio frame may be divided into two types: a 5-ms period and a 10-ms period, so as to flexibly support uplink and downlink services with different subframe ratios. In the 5-ms period, a subframe 1 and a subframe 6 are fixedly configured as special subframes. In the 10-ms period, a subframe 1 is fixedly configured as a special subframe. In a TDD-LTE communications system, as shown in Table 1, seven subframe ratios are supported.

**Table 1**

| **Subframe ratio** | **Period** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 10 ms | D | S | U | U | U | D | S | U | U | D |

In Table 1, D represents a downlink subframe, U represents an uplink subframe, and S represents a special subframe. In this embodiment, the subframe ratio of the primary component carrier may be the same as or different from the subframe ratio of the carrier. When the subframe ratio of the primary component carrier is the same as the subframe ratio of the secondary component carrier, all uplink subframes of the primary component carrier and the secondary component carrier overlap. When the subframe ratio of the primary component carrier is different from the subframe ratio of the secondary component carrier, only some uplink subframes of the primary component carrier and the secondary component carrier overlap.

In this embodiment, a magnitude of the subframe offset amount may be determined according to an actual need. The subframe offset amount is the magnitude of N subframes, and the subframe offset amount is not equal to the integer multiple of the period of the subframe ratio of the secondary component carrier. In the prior art, within one scheduling period, the first subframe of a primary component carrier is aligned with the first subframe of a secondary component carrier in a subframe pattern. In this embodiment, the subframe of the secondary component carrier is offset, so that the first subframe of the primary component carrier is not aligned with the first subframe of the secondary component carrier in a subframe pattern, and therefore uplink subframes of the secondary component carrier are staggered from uplink subframes of the primary component carrier or another secondary component carrier.

It should be noted that multiple secondary component carriers may be configured for the primary component carrier. The subframe offset amount of the newly added secondary component carrier may be the same as or different from a subframe offset amount of another secondary component carrier of the primary component carrier, and the subframe ratio of the secondary component carrier may be the same as or different from the subframe ratio of the primary component carrier and a subframe ratio of another secondary component carrier of the primary component carrier.

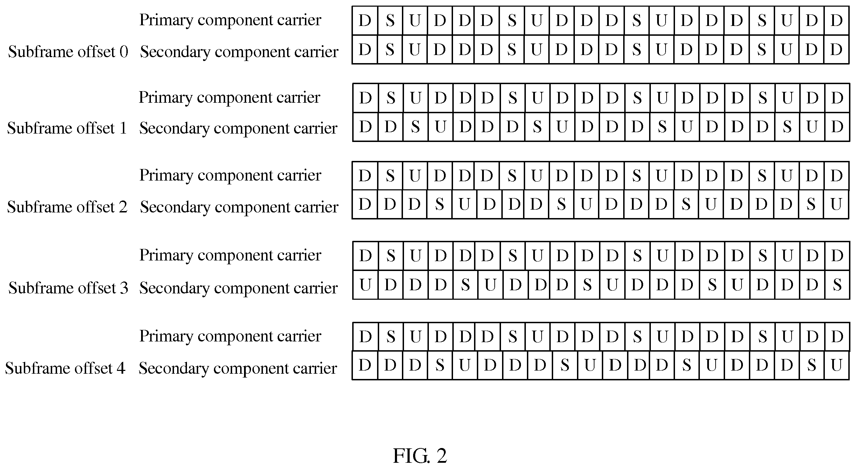

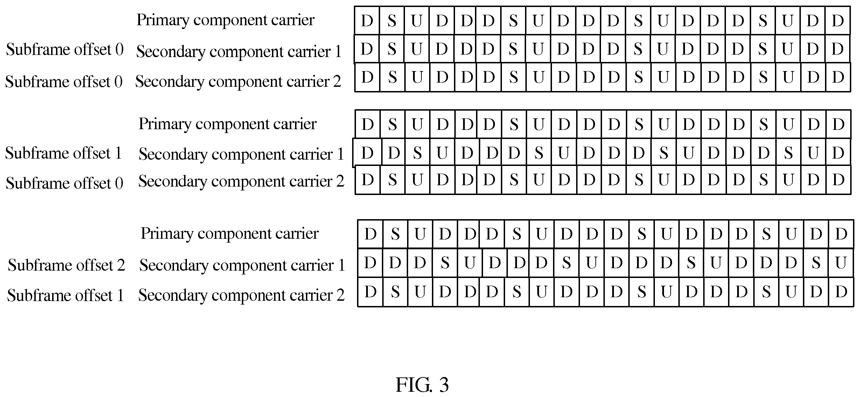

As shown in FIG. 2, FIG. 2 is a subframe pattern obtained after subframes of carriers with a same subframe ratio are offset. There are totally two carriers in FIG. 2: one primary component carrier and one secondary component carrier. Subframe ratios of the primary component carrier and the secondary component carrier are both a ratio 2. Subframe offset amounts of the secondary component carrier are separately 1, 2, 3, and 4. The subframe offset amount of 0 means that a subframe is not offset. FIG. 3 is another subframe pattern obtained after subframes of carriers with a same subframe ratio are offset. There are totally three carriers in FIG. 3: one carrier and two secondary component carriers. Subframe ratios of the primary component carrier and the two secondary component carriers are all a ratio 2. Subframe offset amounts of the two secondary component carriers are different. As shown in FIG. 2 and FIG. 3, during aggregation of two or more carriers with a same ratio, uplink subframes of the two or more carriers may be staggered according to different subframe offset amounts.

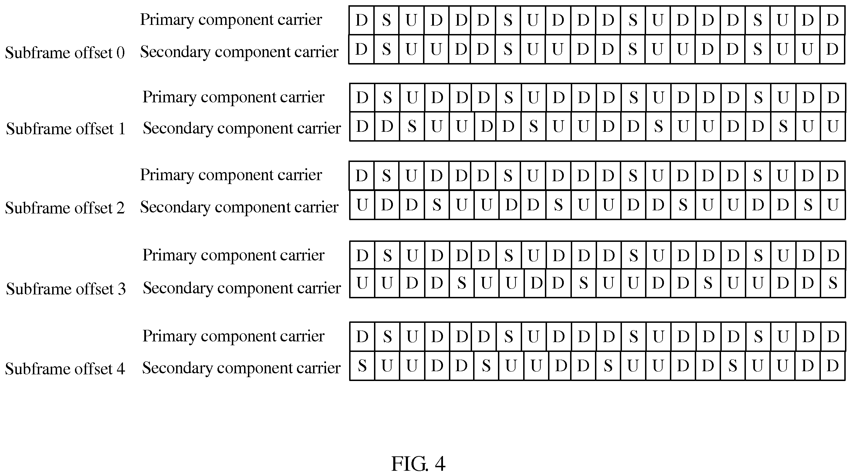

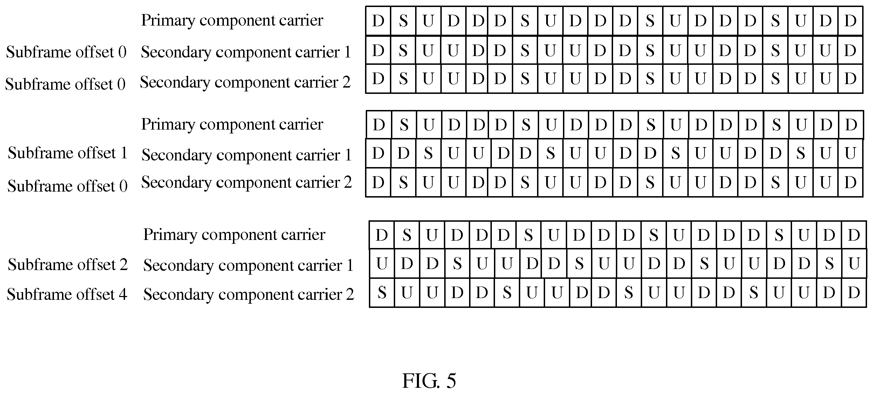

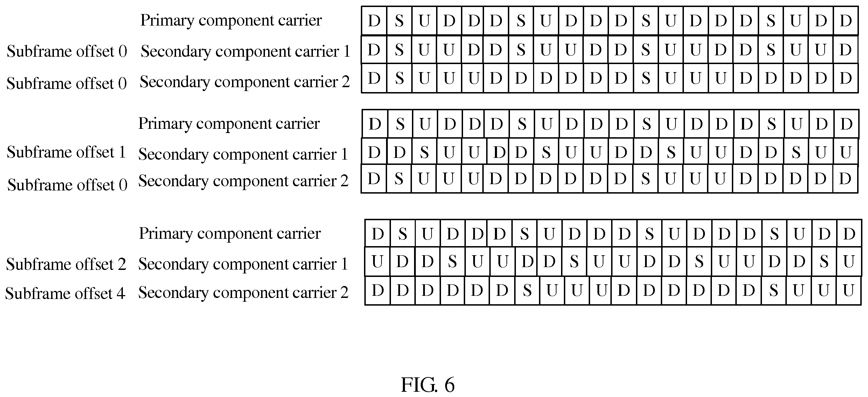

FIG. 4 is a subframe pattern obtained after subframes of carriers with different subframe ratios are offset. There are totally two carriers in FIG. 4: one primary component carrier and one secondary component carrier. A ratio 2 is used for the primary component carrier, and a ratio 1 is used for the secondary component carrier. Subframe offset amounts of the secondary component carrier are separately 1, 2, 3, and 4. FIG. 5 is another subframe pattern obtained after subframes of carriers with different subframe ratios are offset. There are totally three carriers in FIG. 5: one carrier and two secondary component carriers. A subframe ratio of the primary component carrier is a ratio 2, and subframe ratios of the two secondary component carriers are a ratio 1. Subframe offset amounts of the two secondary component carriers are different. FIG. 6 is still another subframe pattern obtained after subframes of carriers with different subframe ratios are offset. There are totally three carriers in FIG. 5: one carrier and two secondary component carriers. A subframe ratio of the primary component carrier is a ratio 2, a subframe ratio of a secondary component carrier 1 is a ratio 1, and a subframe ratio of a secondary component carrier is a ratio 3. Subframe offset amounts of the two secondary component carriers are different. It may be learned from FIG. 4 to FIG. 6 that during aggregation of two or more TDD carriers with different ratios, uplink subframes of the two or more carriers may be staggered according to different subframe offset amounts.

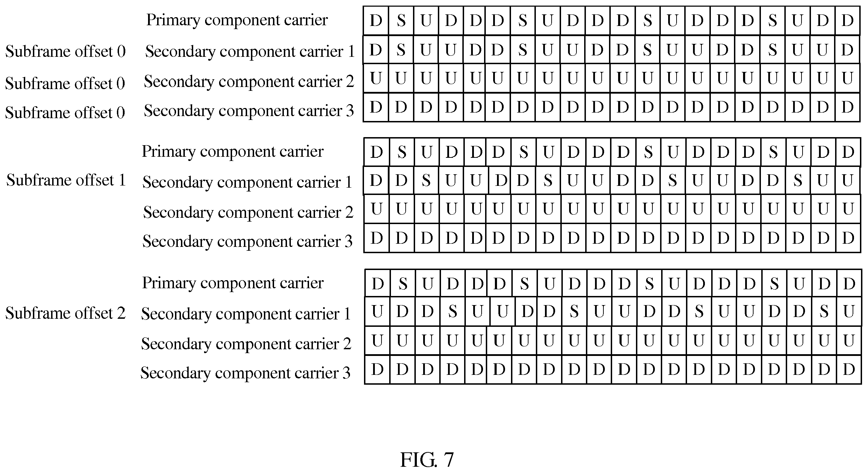

The primary component carriers and the secondary component carriers in FIG. 2 to FIG. 6 are all TDD carriers. In the method in this embodiment of the present invention, the secondary component carrier may further include an FDD carrier. When both the TDD carrier and the FDD carrier are used, the primary component carrier is a TDD carrier, and the secondary component carrier needs to include at least one TDD carrier. FIG. 7 is a subframe pattern obtained after subframes of both a TDD carrier and an FDD carrier are offset. As shown in FIG. 7, there are totally four carriers in FIG. 7: one primary component carrier and three secondary component carriers. A subframe ratio of the primary component carrier is a ratio 2, and a subframe ratio of a secondary component carrier 1 is a ratio 1. A secondary component carrier 3 is an FDD uplink carrier, and a carrier 4 is an FDD downlink carrier. Subframe offset amounts of the secondary component carrier 1 are separately 1 and 2.

It may be learned from the examples shown in FIG. 2 to FIG. 7 that in comparison with the prior art, subframe ratios of two or more carriers are the same as those defined in an existing protocol, but a subframe pattern obtained after the two or more carriers are aggregated is totally different from a subframe pattern of carrier aggregation implemented in the prior art. All uplink subframes are staggered by means of subframe offset, so that all uplink subframes of different carriers can be used by same UE.

Step 103: The base station configures the secondary component carrier for each UE in a first UE set within a coverage area of the base station, and sends configuration information to each UE in the first UE set, where the configuration information includes: a frequency of the secondary component carrier, the subframe ratio of the secondary component carrier, and the subframe offset amount of the secondary component carrier.

Before configuring the secondary component carrier for each UE in the first UE set within the coverage area of the base station, the base station may further perform the following operations: The base station broadcasts the frequency, the subframe ratio, and the subframe offset amount of the secondary component carrier to all UEs within the coverage area of the base station by using the primary component carrier or the secondary component carrier; then, the base station determines a second UE set from all the UEs according to a preset selection condition, and sends a measurement instruction to each UE in the second UE set, where the measurement instruction is used to instruct each UE in the second UE set to measure the secondary component carrier. Each UE in the second UE set meets the preset selection condition. The preset selection condition includes but is not limited to the following conditions: (1) UE supports uplink carrier aggregation; (2) UE supports aggregation of carriers whose subframes are offset; (3) UE supports full-duplex; (4) UE is a user with poor coverage, for example, reference signal received power (Reference Signal Receiving Power, RSRP for short) of the UE is less than -120 dBm (decibel); (5) An uplink service of UE is limited by power, for example, a power headroom report (Power Headroom Report, PHR for short) of the UE is 0, and a signal to interference plus noise ratio (Signal to Interference plus Noise Ratio, SINR for short) is less than -3 dB; (5) An uplink service of UE is limited, for example, an air interface rate does not reach 10% of a rate required by a user; (6) A downlink service of UE is limited, for example, an air interface rate does not reach 10% of a rate required by a user.

The configuration information may further include bandwidth of the secondary component carrier, and the base station may further notify a neighboring cell of the configuration information of the secondary component carrier.

After receiving the measurement instruction sent by the base station, each UE in the second UE set measures the secondary component carrier, and returns a measurement result about the secondary component carrier to the base station. After receiving the measurement result that is about the secondary component carrier and that is returned by each UE in the second UE set, the base station determines, from the second UE set according to the measurement result that is about the secondary component carrier and that is returned by each UE in the second UE set, UE whose measurement result meets a preset condition, and forms the first UE set by using the UE whose measurement result meets the preset condition. The preset condition includes but is not limited to the following condition: Downlink RSRP of UE is greater than a specific threshold and/or an SINR is greater than a specific threshold. The base station forms the first UE set by using the UE that meets the preset condition, then configures the secondary component carrier for UE in the first UE set, and sends configuration information of each UE in the first UE set to each UE, so that each UE in the first UE set receives or sends data according to the configuration information of the secondary component carrier.

In this embodiment, a base station determines a subframe offset amount relative to a primary component carrier for a newly added secondary component carrier, then configures the secondary component carrier for each UE in a first UE set within a coverage area of the base station, and sends configuration information to each UE in the first UE set. The configuration information includes: a frequency of the secondary component carrier, a subframe ratio of the secondary component carrier, and the subframe offset amount of the secondary component carrier. In this method, the subframe offset amount is set for the secondary component carrier, so that uplink subframes of the secondary component carrier and the primary component carrier can be staggered, or uplink subframes of the secondary component carrier and another carrier can be staggered. Therefore, a user at a relatively far point who supports carrier aggregation can use uplink subframes on different carriers, and the user at the relatively far point can obtain a gain brought by the carrier aggregation, so that coverage is enhanced and a capacity is enlarged.

It should be noted that based on Embodiment 1, in another embodiment, a secondary component carrier may be added to a primary component carrier at a moment T1, and then in a network system running process, a subframe offset amount is set for the secondary component carrier at a moment T2 according to a service requirement.

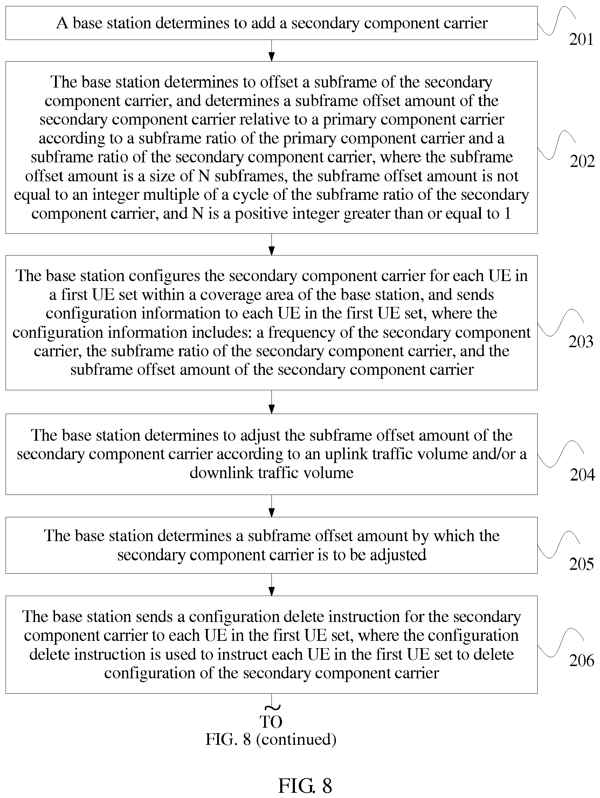

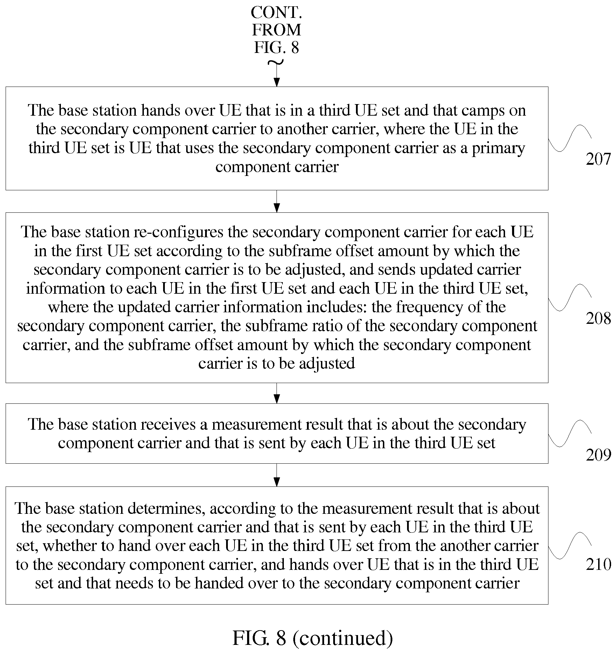

FIG. 8 is a flowchart of a subframe offset-based carrier aggregation method according to Embodiment 2 of the present invention. As shown in FIG. 8, the method in this embodiment may include the following steps.

Step 201: A base station determines to add a secondary component carrier.

Step 202: The base station determines to offset a subframe of the secondary component carrier, and determines a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1.

Step 203: The base station configures the secondary component carrier for each UE in a first UE set within a coverage area of the base station, and sends configuration information to each UE in the first UE set, where the configuration information includes: a frequency of the secondary component carrier, the subframe ratio of the secondary component carrier, and the subframe offset amount of the secondary component carrier.

For specific implementations of steps 201 to 203, refer to descriptions in Embodiment 1. Details are not described herein again.

Step 204: The base station determines, according to an uplink traffic volume and/or a downlink traffic volume, to adjust the subframe offset amount of the secondary component carrier.

When an uplink traffic volume in a communications system increases or decreases, and/or a downlink traffic volume increases or decreases, the base station may adjust the subframe offset amount of the secondary component carrier, to adapt to a traffic volume change in the communications system and maximize a capacity of the communications system.

Step 205: The base station determines a subframe offset amount by which the secondary component carrier is to be adjusted.

Specifically, if the uplink traffic volume increases, the subframe offset amount may be adjusted to maximize quantities of uplink subframes on the primary component carrier and the secondary component carrier, that is, all uplink subframes can be used by a user. If the uplink traffic volume decreases, the subframe offset amount may be adjusted to decrease quantities of uplink subframes on the primary component carrier and the secondary component carrier, or the subframe offset amount is adjusted to 0, that is, a subframe does not need to be offset.

Step 206: The base station sends a configuration delete instruction for the secondary component carrier to each UE in the first UE set, where the configuration delete instruction is used to instruct each UE in the first UE set to delete configuration of the secondary component carrier.

The base station needs to delete original configuration of secondary component carriers of all UEs for which the secondary component carriers have been configured, and re-configure subframe offset amounts for the secondary component carriers.

Step 207: The base station hands over UE that is in a third UE set and that camps on the secondary component carrier to another carrier, where the UE in the third UE set is UE that uses the secondary component carrier as a primary component carrier.

It should be noted that the primary component carrier and the secondary component carrier are relative to UE. A carrier is a secondary component carrier for some UEs, but is a primary component carrier for other UEs. Therefore, the secondary component carrier added by the base station may be a primary component carrier of the UE in the third UE set. The UE in the third UE set uses the secondary component carrier as a primary component carrier, that is, the UE in the third UE set uses the secondary component carrier to access a network. If the configuration information of the secondary component carrier is changed, the UE in the third UE set is also affected. To avoid affecting data receiving or sending of the UE in the third UE set, the base station hands over the UE in the third UE set to another carrier.

Step 208: The base station re-configures the secondary component carrier for each UE in the first UE set according to the subframe offset amount by which the secondary component carrier is to be adjusted, and sends updated carrier information to each UE in the first UE set and each UE in the third UE set, where the updated carrier information includes: the frequency of the secondary component carrier, the subframe ratio of the secondary component carrier, and the subframe offset amount by which the secondary component carrier is to be adjusted.

After deleting original configuration of the secondary component carrier of each UE in the first UE set, the base station re-configures the secondary component carrier for each UE, and sends the updated carrier information to each UE. A subframe offset amount that is of the secondary component carrier and that is in the updated carrier information is changed. The UE in the first UE set subsequently receives or sends data according to the updated carrier information.

Step 209: The base station receives a measurement result that is about the secondary component carrier and that is sent by each UE in the third UE set.

The measurement result about the secondary component carrier is obtained by each UE in the third UE set by performing measurement according to the updated carrier information. The base station sends the updated carrier information to the UE in the third UE set, so that the UE in the third UE set re-measures the secondary component carrier.

Step 210: The base station determines, according to the measurement result that is about the secondary component carrier and that is sent by each UE in the third UE set, whether to hand over each UE in the third UE set from the another carrier to the secondary component carrier, and hands over UE that is in the third UE set and that needs to be handed over to the secondary component carrier.

Specifically, if a measurement result that is about the secondary component carrier and that is reported by UE in the third UE set indicates that signal quality of the secondary component carrier meets a handover condition, the UE is handed over from the another carrier to the secondary component carrier. UE that does not meet the handover condition is not handed over. That the UE is handed over from the another carrier to the secondary component carrier means that the UE is handed over between cells.

In this embodiment, the base station may further change the subframe offset amount of the secondary component carrier according to a traffic volume change, to maximize use of resources in the communications system.

In an LTE system, a basic unit of physical-layer scheduling is 1 millisecond (ms), that is, a magnitude of one subframe. Such a short time interval may ensure a relatively low data latency in LTE. However, because of limited power, a user at the relatively far point may fail to meet a block error ratio (Block Error Ratio, BER for short) requirement during data sending within the time interval of 1 ms. Therefore, a TTI bundling (Budding) concept is proposed. Uplink consecutive TTIs may be allocated to same UE. Same content is sent in the uplink TTIs. In this way, a probability of successfully decoding data is improved, and an uplink coverage area of the LTE is enlarged. In the prior art, usually four consecutive TTIs are bundled, and the four consecutive TTIs belong to one subcarrier. In the methods in the embodiments of the present invention, there are more consecutive uplink timeslots and consecutive downlink timeslots between carriers after subframe offset. Therefore, cross-carrier TTI bundling can be implemented.

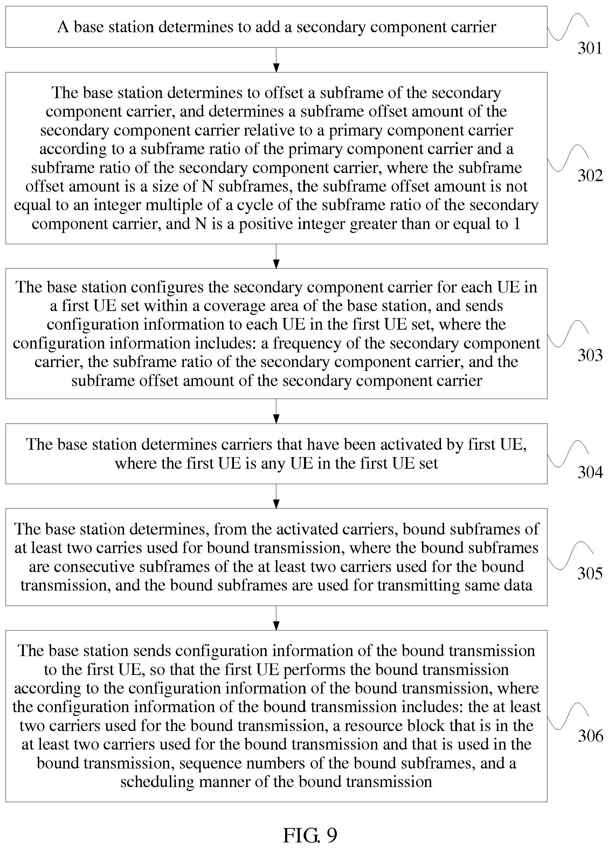

FIG. 9 is a flowchart of a subframe offset-based carrier aggregation method according to Embodiment 3 of the present invention. This embodiment is implemented based on Embodiment 1 and Embodiment 2. As shown in FIG. 9, the method in this embodiment may include the following steps.

Step 301: A base station determines to add a secondary component carrier.

Step 302: The base station determines to offset a subframe of the secondary component carrier, and determines a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1.

Step 303: The base station configures the secondary component carrier for each UE in a first UE set within a coverage area of the base station, and sends configuration information to each UE in the first UE set, where the configuration information includes: a frequency of the secondary component carrier, the subframe ratio of the secondary component carrier, and the subframe offset amount of the secondary component carrier.

For specific implementations of steps 301 to 303, refer to descriptions in Embodiment 1. Details are not described herein again.

Step 304: The base station determines carriers that have been activated by first UE, where the first UE is any UE in the first UE set.

Step 305: The base station determines, from the activated carriers, bundled subframes of at least two carries used for bundled transmission, where the bundled subframes are consecutive subframes of the at least two carriers used for the bundled transmission, and the bundled subframes are used for transmitting same data.

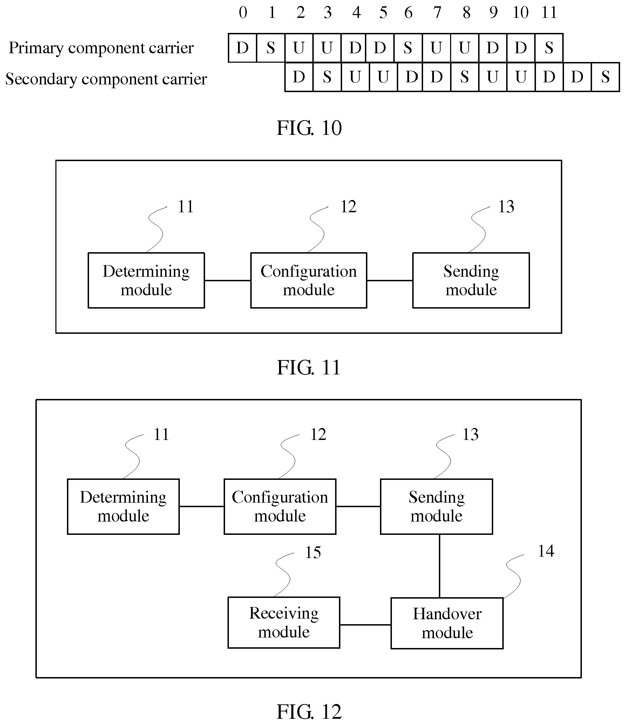

There may be two or more carriers used for the bundled transmission. The at least two carriers used for the bundled transmission may be a primary component carrier and a secondary component carrier, or may be secondary component carriers. FIG. 10 is still another subframe pattern obtained after subframes of carriers with a same subframe ratio are offset. As shown in FIG. 10, both ratios of a carrier 1 and a carrier 2 are a ratio 2. A subframe of the carrier 2 is offset. After the offset is performed on the carrier, the first UE may perform uplink transmission in subframes 2, 3, 7, and 8 of the carrier 1, and perform uplink transmission in subframes 4, 5, 9, and 10 of the carrier 2. It may be learned from the foregoing descriptions that the first UE may transmit uplink data in consecutive subframes 2, 3, 4, and 5, and transmit uplink data in consecutive subframes 7, 8, 9, and 10. Therefore, by means of TTI bundling, the uplink subframes 2 and 3 of the carrier 1 may be bundled with the uplink subframes 4 and 5 of the carrier 2, and the uplink subframes 7 and 8 of the carrier 1 may be bundled with the uplink subframes 9 and 10 of the carrier 2.

Step 306: The base station sends configuration information of the bundled transmission to the first UE, so that the first UE performs the bundled transmission according to the configuration information of the bundled transmission, where the configuration information of the bundled transmission includes: the at least two carriers used for the bundled transmission, a resource block that is in the at least two carriers used for the bundled transmission and that is used in the bundled transmission, sequence numbers of the bundled subframes, and a scheduling manner of the bundled transmission.

After determining the bundled subframes, the base station sends the configuration information of the bundled transmission to the first UE. The base station may send the configuration information of the bundled transmission by using the primary component carrier, or may send the configuration information of the bundled transmission by using the secondary component carrier. Alternatively, the base station may send the configuration information of the bundled transmission by using both the primary component carrier and the secondary component carrier. The configuration information of the bundled transmission includes: the at least two carriers used for the bundled transmission, a resource block (Resource Block, RB for short) that is in the at least two carriers used for the bundled transmission and that is used in the bundled transmission, sequence numbers of the bundled subframes, and a scheduling manner of the bundled transmission. Each carrier used in the bundled transmission includes multiple resource blocks. Some resource blocks are used in the bundled transmission, and some resource blocks are not used in the bundled transmission. Therefore, the base station further needs to notify the first UE of resource blocks that are used in the bundled transmission. The scheduling manner includes dynamic scheduling and semi-persistent scheduling (Semi-Persistent Scheduling, SPS for short).

In this embodiment, during cross-carrier semi-persistent scheduling, the base station may indicate scheduling information of the semi-persistent scheduling by using one carrier in carrier aggregation. The scheduling information is usually indicated by a primary component carrier, and certainly, may be indicated by a secondary component carrier. Alternatively, scheduling information of all times of semi-persistent scheduling may be indicated by different carriers. Once the scheduling information is indicated, transmission resources used by the base station in an entire semi-persistent scheduling period are determined, and the transmission resources may separately belong to different carriers until the semi-persistent scheduling period ends or resources are reallocated in dynamic scheduling.

In this embodiment, a diversity gain in time may be further obtained by using cross-carrier frequency hopping during the cross-carrier semi-persistent scheduling. In a process of the cross-carrier semi-persistent scheduling, the base station may instruct the first UE to configure different frequency hopping modes on different carriers. Alternatively, frequency hopping may be used for some carriers but not for some other carriers.

FIG. 11 is a schematic structural diagram of a base station according to Embodiment 4 of the present invention. As shown in FIG. 11, the base station provided in this embodiment may include: a determining module 11, a configuration module 12, and a sending module 13.

The determining module 11 is configured to determine to add a secondary component carrier. The determining module 11 is further configured to: determine to offset a subframe of the secondary component carrier, and determine a subframe offset amount of the secondary component carrier relative to a primary component carrier according to a subframe ratio of the primary component carrier and a subframe ratio of the secondary component carrier. The subframe offset amount is a magnitude of N subframes, the subframe offset amount is not equal to an integer multiple of a period of the subframe ratio of the secondary component carrier, and N is a positive integer greater than or equal to 1. The configuration module 12 is configured to configure the secondary component carrier for each UE in a first UE set within a coverage area of the base station. The sending module 13 is configured to send configuration information to each UE in the first UE set, and the configuration information includes: a frequency of the secondary component carrier, the subframe ratio of the secondary component carrier, and the subframe offset amount of the secondary component carrier.

Optionally, the sending module 13 is further configured to: before the configuration module 12 configures the secondary component carrier for each UE in the first UE set within the coverage area of the base station, broadcast the frequency, the subframe ratio, and the subframe offset amount of the secondary component carrier to all UEs within the coverage area of the base station by using the secondary component carrier. The determining module 11 is further configured to determine a second UE set from all the UEs according to a preset selection condition. The sending module 13 is further configured to send a measurement instruction to each UE in the second UE set, and the measurement instruction is used to instruct each UE in the second UE set to measure the secondary component carrier. Correspondingly, the base station further includes: a receiving module, configured to receive a measurement result that is about the secondary component carrier and that is returned by each UE in the second UE set. The determining module is further configured to: determine, from the second UE set according to the measurement result that is about the secondary component carrier and that is returned by each UE in the second UE set, UE whose measurement result meets a preset condition, and form the first UE set by using the UE whose measurement result meets the preset condition.

Optionally, the subframe offset amount of the secondary component carrier is the same as a subframe offset amount of another secondary component carrier of the primary component carrier.

Optionally, the subframe offset amount of the secondary component carrier is different from a subframe offset amount of another secondary component carrier of the primary component carrier.

Optionally, the subframe ratio of the secondary component carrier is the same as the subframe ratio of the primary component carrier and a subframe ratio of another secondary component carrier of the primary component carrier.

Optionally, the subframe ratio of the secondary component carrier is different from the subframe ratio of the primary component carrier and a subframe ratio of another secondary component carrier of the primary component carrier.

The base station in this embodiment may be configured to perform the method provided in Embodiment 1. Specific implementations and technical effects thereof are similar, and details are not described herein.

Embodiment 5 of the present invention provides a base station. FIG. 12 is a schematic structural diagram of the base station according to Embodiment 5 of the present invention. As shown in FIG. 12, based on the base station shown in FIG. 11, the base station in this embodiment further includes: a handover module 14 and a receiving module 15. Correspondingly, based on the base station in Embodiment 4, the base station in this embodiment further has the following functions:

The determining module 11 is further configured to: determine, according to an uplink traffic volume and/or a downlink traffic volume, to adjust the subframe offset amount of the secondary component carrier; and determine a subframe offset amount by which the secondary component carrier is to be adjusted.

The sending module 13 is further configured to send a configuration delete instruction for the secondary component carrier to each UE in the first UE set. The configuration delete instruction is used to instruct each UE in the first UE set to delete configuration of the secondary component carrier.

The handover module 14 is configured to hand over UE that is in a third UE set and that camps on the secondary component carrier to another carrier, and the UE in the third UE set is UE that uses the secondary component carrier as a primary component carrier.

The configuration module 12 is further configured to re-configure the secondary component carrier for each UE in the first UE set according to the subframe offset amount by which the secondary component carrier is to be adjusted.

The sending module 13 is further configured to send updated carrier information to each UE in the first UE set and each UE in the third UE set. The updated carrier information includes: the frequency of the secondary component carrier, the subframe ratio of the secondary component carrier, and the subframe offset amount by which the secondary component carrier is to be adjusted.

The receiving module 15 is configured to receive a measurement result that is about the secondary component carrier and that is sent by each UE in the third UE set. The measurement result about the secondary component carrier is obtained by each UE in the third UE set by performing measurement according to the updated carrier information.

The handover module 14 is further configured to: determine, according to the measurement result that is about the secondary component carrier and that is sent by each UE in the third UE set, whether to hand over each UE in the third UE set from the another carrier to the secondary component carrier, and hand over UE that is in the third UE set and that needs to be handed over to the secondary component carrier.

The base station in this embodiment may be configured to perform the method provided in Embodiment 2. Specific implementations and technical effects thereof are similar, and details are not described herein.

Embodiment 6 of the present invention provides a base station. For a structure of the base station, refer to FIG. 11 or FIG. 12. Based on the base stations in Embodiment 4 and Embodiment 5, the base station in this embodiment further has the following functions:

The determining module 11 is further configured to: determine carriers that have been activated by first UE, where the first UE is any UE in the first UE set; and determine, from the activated carriers, bundled subframes of at least two carries used for bundled transmission. The bundled subframes are consecutive subframes of the at least two carriers used for the bundled transmission, and the bundled subframes are used for transmitting same data.

The sending module 13 is further configured to send configuration information of the bundled transmission to the first UE, so that the first UE performs the bundled transmission according to the configuration information of the bundled transmission. The configuration information of the bundled transmission includes: the at least two carriers used for the bundled transmission, a resource block that is in the at least two carriers used for the bundled transmission and that is used in the bundled transmission, sequence numbers of the bundled subframes, and a scheduling manner of the bundled transmission.

The base station in this embodiment may be configured to perform the method provided in Embodiment 3. Specific implementations and technical effects thereof are similar, and details are not described herein.

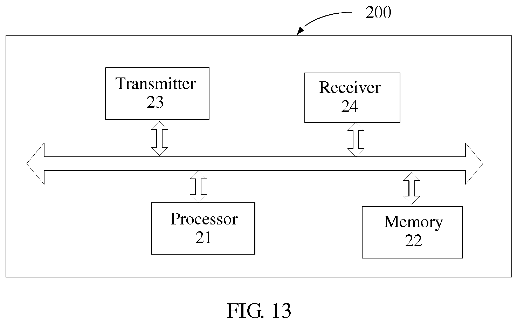

FIG. 13 is a schematic structural diagram of a base station according to Embodiment 7 of the present invention. As shown in FIG. 13, a base station 200 provided in this embodiment includes: a processor 21, a memory 22, a transmitter 23, and a receiver 24. The memory 22, the transmitter 23, and the receiver 24 are connected to and communicate with the processor 21 by using a system bus. The memory 23 is configured to store a computer program. The processor 21 is configured to execute the computer program so as to perform the following method.

The processor 21 is configured to: determine to add a secondary component carrier; determine to offset a subframe of the secondary component carrier; determine a subframe offset amount of the secondary component carrier relative to a primary component carrier according to a subframe ratio of the primary component carrier and a subframe ratio of the secondary component carrier, where the subframe offset amount is a magnitude of N subframes, the subframe offset amount is not equal to an integer multiple of a period of the subframe ratio of the secondary component carrier, and N is a positive integer greater than or equal to 1; and configure the secondary component carrier for each UE in a first user equipment UE set within a coverage area of the base station.

The transmitter 23 is configured to send configuration information to each UE in the first UE set, and the configuration information includes: a frequency of the secondary component carrier, the subframe ratio of the secondary component carrier, and the subframe offset amount of the secondary component carrier.

Optionally, the processor 21 is further configured to: determine, according to an uplink traffic volume and/or a downlink traffic volume, to adjust the subframe offset amount of the secondary component carrier; and determine a subframe offset amount by which the secondary component carrier is to be adjusted. Correspondingly, the transmitter 23 is further configured to: send a configuration delete instruction for the secondary component carrier to each UE in the first UE set, where the configuration delete instruction is used to instruct each UE in the first UE set to delete configuration of the secondary component carrier; hand over UE that is in a third UE set and that camps on the secondary component carrier to another carrier, where the UE in the third UE set is UE that uses the secondary component carrier as a primary component carrier; and then re-configure the secondary component carrier for each UE in the first UE set according to the subframe offset amount by which the secondary component carrier is to be adjusted. The transmitter 23 is further configured to send updated carrier information to each UE in the first UE set and each UE in the third UE set, and the updated carrier information includes: the frequency of the secondary component carrier, the subframe ratio of the secondary component carrier, and the subframe offset amount by which the secondary component carrier is to be adjusted. The receiver 24 is further configured to receive a measurement result that is about the secondary component carrier and that is sent by each UE in the third UE set, and the measurement result about the secondary component carrier is obtained by each UE in the third UE set by performing measurement according to the updated carrier information. The processor 21 is further configured to: determine, according to the measurement result that is about the secondary component carrier and that is sent by each UE in the third UE set, whether to hand over each UE in the third UE set from the another carrier to the secondary component carrier, and hand over UE that is in the third UE set and that needs to be handed over to the secondary component carrier.

Optionally, the processor 21 is further configured to: determine carriers that have been activated by first UE, where the first UE is any UE in the first UE set; and determine, from the activated carriers, bundled subframes of at least two carries used for bundled transmission, where the bundled subframes are consecutive subframes of the at least two carriers used for the bundled transmission, and the bundled subframes are used for transmitting same data. Correspondingly, the transmitter 23 is further configured to send configuration information of the bundled transmission to the first UE, so that the first UE performs the bundled transmission according to the configuration information of the bundled transmission. The configuration information of the bundled transmission includes: the at least two carriers used for the bundled transmission, a resource block that is in the at least two carriers used for the bundled transmission and that is used in the bundled transmission, sequence numbers of the bundled subframes, and a scheduling manner of the bundled transmission.

Optionally, before configuring the secondary component carrier for each UE in the first UE set within the coverage area of the base station, the processor 21 is further configured to: broadcast the frequency, the subframe ratio, and the subframe offset amount of the secondary component carrier to all UEs within the coverage area of the base station by using the secondary component carrier; determine a second UE set from all the UEs according to a preset selection condition; and send a measurement instruction to each UE in the second UE set. The measurement instruction is used to instruct each UE in the second UE set to measure the secondary component carrier. Correspondingly, the receiver 24 is configured to receive a measurement result that is about the secondary component carrier and that is returned by each UE in the second UE set. The processor 21 is further configured to: determine, from the second UE set according to the measurement result that is about the secondary component carrier and that is returned by each UE in the second UE set, UE whose measurement result meets a preset condition, and form the first UE set by using the UE whose measurement result meets the preset condition.

Optionally, the subframe offset amount of the secondary component carrier is the same as a subframe offset amount of another secondary component carrier of the primary component carrier.

Optionally, the subframe offset amount of the secondary component carrier is different from a subframe offset amount of another secondary component carrier of the primary component carrier.

Optionally, the subframe ratio of the secondary component carrier is the same as the subframe ratio of the primary component carrier and a subframe ratio of another secondary component carrier of the primary component carrier.

Optionally, the subframe ratio of the secondary component carrier is different from the subframe ratio of the primary component carrier and a subframe ratio of another secondary component carrier of the primary component carrier.

The base station in this embodiment may be configured to perform the methods provided in Embodiment 1 to Embodiment 3. Specific implementations and technical effects thereof are similar, and details are not described herein.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that the present invention is defined by the appended claims and limited only by their scope.

## Claims

1. A subframe offset-based carrier aggregation method, comprising:
determining, by a base station, to add a secondary component carrier;
determining, by the base station, to offset a subframe of the secondary component carrier, said method being **characterized by**:
determining, by the base station, a subframe offset amount of the secondary component carrier relative to a primary component carrier according to a subframe ratio of the primary component carrier and a subframe ratio of the secondary component carrier, wherein the subframe offset amount is a magnitude of N subframes, the subframe offset amount is not equal to an integer multiple of a period of the subframe ratio of the secondary component carrier, and N is a positive integer greater than or equal to 1; and
configuring, by the base station, the secondary component carrier for each user equipment, UE, in a first user equipment UE set within a coverage area of the base station, and sending configuration information to each UE in the first UE set, wherein the configuration information comprises: a frequency of the secondary component carrier, the subframe ratio of the secondary component carrier, and the subframe offset amount of the secondary component carrier.

2. The method according to claim 1, wherein the method further comprises:
determining, by the base station according to an uplink traffic volume and/or a downlink traffic volume, to adjust the subframe offset amount of the secondary component carrier;
determining, by the base station, a subframe offset amount by which the secondary component carrier is to be adjusted;
sending, by the base station, a configuration delete instruction for the secondary component carrier to each UE in the first UE set, wherein the configuration delete instruction is used to instruct each UE in the first UE set to delete configuration of the secondary component carrier;
handing over, by the base station, UE that is in a third UE set and that camps on the secondary component carrier to another carrier, wherein the UE in the third UE set is UE that uses the secondary component carrier as a primary component carrier;
re-configuring, by the base station, the secondary component carrier for each UE in the first UE set according to the subframe offset amount by which the secondary component carrier is to be adjusted, and sending updated carrier information to each UE in the first UE set and each UE in the third UE set, wherein the updated carrier information comprises: the frequency of the secondary component carrier, the subframe ratio of the secondary component carrier, and the subframe offset amount by which the secondary component carrier is to be adjusted;
receiving, by the base station, a measurement result that is about the secondary component carrier and that is sent by each UE in the third UE set, wherein the measurement result about the secondary component carrier is obtained by each UE in the third UE set by performing measurement according to the updated carrier information; and
determining, by the base station according to the measurement result that is about the secondary component carrier and that is sent by each UE in the third UE set, whether to hand over each UE in the third UE set from the another carrier to the secondary component carrier, and handing over UE that is in the third UE set and that needs to be handed over to the secondary component carrier.

3. The method according to claim 1 or 2, wherein the method further comprises:
determining, by the base station, carriers that have been activated by first UE, wherein the first UE is any UE in the first UE set;
determining, by the base station from the activated carriers, bundled subframes of at least two carries used for bundled transmission, wherein the bundled subframes are consecutive subframes of the at least two carriers used for the bundled transmission, and the bundled subframes are used for transmitting same data; and
sending, by the base station, configuration information of the bundled transmission to the first UE, so that the first UE performs the bundled transmission according to the configuration information of the bundled transmission, wherein the configuration information of the bundled transmission comprises: the at least two carriers used for the bundled transmission, a resource block that is in the at least two carriers used for the bundled transmission and that is used in the bundled transmission, sequence numbers of the bundled subframes, and a scheduling manner of the bundled transmission.

4. The method according to claim 1, wherein before the configuring, by the base station, the secondary component carrier for each UE in a first user equipment UE set within a coverage area of the base station, the method further comprises:
broadcasting, by the base station, the frequency, the subframe ratio, and the subframe offset amount of the secondary component carrier to all UEs within the coverage area of the base station by using the secondary component carrier;
determining, by the base station, a second UE set from all the UEs according to a preset selection condition, and sending a measurement instruction to each UE in the second UE set, wherein the measurement instruction is used to instruct each UE in the second UE set to measure the secondary component carrier;
receiving, by the base station, a measurement result that is about the secondary component carrier and that is returned by each UE in the second UE set; and
determining, by the base station from the second UE set according to the measurement result that is about the secondary component carrier and that is returned by each UE in the second UE set, UE whose measurement result meets a preset condition, and forming the first UE set by using the UE whose measurement result meets the preset condition.

5. The method according to claim 1, wherein the subframe offset amount of the secondary component carrier is the same as a subframe offset amount of another secondary component carrier of the primary component carrier.

6. The method according to claim 1, wherein the subframe offset amount of the secondary component carrier is different from a subframe offset amount of another secondary component carrier of the primary component carrier.

7. The method according to claim 1, wherein the subframe ratio of the secondary component carrier is the same as the subframe ratio of the primary component carrier and a subframe ratio of another secondary component carrier of the primary component carrier.

8. The method according to claim 1, wherein the subframe ratio of the secondary component carrier is different from the subframe ratio of the primary component carrier and a subframe ratio of another secondary component carrier of the primary component carrier.

9. A base station, comprising:
a determining module, configured to determine to add a secondary component carrier, wherein
the determining module is further configured to: determine to offset a subframe of the secondary component carrier, and determine a subframe offset amount of the secondary component carrier relative to a primary component carrier according to a subframe ratio of the primary component carrier and a subframe ratio of the secondary component carrier, wherein the subframe offset amount is a magnitude of N subframes, the subframe offset amount is not equal to an integer multiple of a period of the subframe ratio of the secondary component carrier, and N is a positive integer greater than or equal to 1;
a configuration module, configured to configure the secondary component carrier for each user equipment, UE, in a first user equipment, UE, set within a coverage area of the base station; and
a sending module, configured to send configuration information to each UE in the first UE set, wherein the configuration information comprises: a frequency of the secondary component carrier, the subframe ratio of the secondary component carrier, and the subframe offset amount of the secondary component carrier.

10. The base station according to claim 9, wherein the determining module is further configured to:
determine, according to an uplink traffic volume and/or a downlink traffic volume, to adjust the subframe offset amount of the secondary component carrier; and
determine a subframe offset amount by which the secondary component carrier is to be adjusted;
the sending module is further configured to send a configuration delete instruction for the secondary component carrier to each UE in the first UE set, wherein the configuration delete instruction is used to instruct each UE in the first UE set to delete configuration of the secondary component carrier;
the base station further comprises a handover module, configured to hand over UE that is in a third UE set and that camps on the secondary component carrier to another carrier, wherein the UE in the third UE set is UE that uses the secondary component carrier as a primary component carrier;
the configuration module is further configured to re-configure the secondary component carrier for each UE in the first UE set according to the subframe offset amount by which the secondary component carrier is to be adjusted;
the sending module is further configured to send updated carrier information to each UE in the first UE set and each UE in the third UE set, wherein the updated carrier information comprises: the frequency of the secondary component carrier, the subframe ratio of the secondary component carrier, and the subframe offset amount by which the secondary component carrier is to be adjusted;
the base station further comprises: a receiving module, configured to receive a measurement result that is about the secondary component carrier and that is sent by each UE in the third UE set, wherein the measurement result about the secondary component carrier is obtained by each UE in the third UE set by performing measurement according to the updated carrier information; and
the handover module is further configured to: determine, according to the measurement result that is about the secondary component carrier and that is sent by each UE in the third UE set, whether to hand over each UE in the third UE set from the another carrier to the secondary component carrier, and hand over UE that is in the third UE set and that needs to be handed over to the secondary component carrier.

11. The base station according to claim 9 or 10, wherein the determining module is further configured to:
determine carriers that have been activated by first UE, wherein the first UE is any UE in the first UE set; and
determine, from the activated carriers, bundled subframes of at least two carries used for bundled transmission, wherein the bundled subframes are consecutive subframes of the at least two carriers used for the bundled transmission, and the bundled subframes are used for transmitting same data; and
the sending module is further configured to send configuration information of the bundled transmission to the first UE, so that the first UE performs the bundled transmission according to the configuration information of the bundled transmission, wherein the configuration information of the bundled transmission comprises: the at least two carriers used for the bundled transmission, a resource block that is in the at least two carriers used for the bundled transmission and that is used in the bundled transmission, sequence numbers of the bundled subframes, and a scheduling manner of the bundled transmission.

12. The base station according to claim 9, wherein the sending module is further configured to:
before the configuration module configures the secondary component carrier for each UE in the first UE set within the coverage area of the base station, broadcast the frequency, the subframe ratio, and the subframe offset amount of the secondary component carrier to all UEs within the coverage area of the base station by using the secondary component carrier;
the determining module is further configured to determine a second UE set from all the UEs according to a preset selection condition;
the sending module is further configured to send a measurement instruction to each UE in the second UE set, wherein the measurement instruction is used to instruct each UE in the second UE set to measure the secondary component carrier;
the base station further comprises:
a receiving module, configured to receive a measurement result that is about the secondary component carrier and that is returned by each UE in the second UE set; and
the determining module is further configured to: determine, from the second UE set according to the measurement result that is about the secondary component carrier and that is returned by each UE in the second UE set, UE whose measurement result meets a preset condition, and form the first UE set by using the UE whose measurement result meets the preset condition.

13. The base station according to claim 9, wherein the subframe offset amount of the secondary component carrier is the same as a subframe offset amount of another secondary component carrier of the primary component carrier.

14. The base station according to claim 9, wherein the subframe offset amount of the secondary component carrier is different from a subframe offset amount of another secondary component carrier of the primary component carrier.

15. A computer program comprising instructions which, when the program is executed by a processor of a base station, cause said processor to carry out the steps of the method of any one of claims 1 to 8.

## Patentansprüche

1. Unterrahmenversatz-basiertes Trägeraggregationsverfahren, umfassend:
Festlegen, durch eine Basisstation, des Hinzufügens eines sekundären Komponententrägers;
Festlegen, durch die Basisstation, einen Unterrahmen des sekundären Komponententrägers zu versetzen, wobei das Verfahren **gekennzeichnet ist durch** Festlegen, durch die Basisstation, eines Unterrahmen-Versatzumfangs des sekundären Komponententrägers relativ zu einem primären Komponententräger entsprechend einem Unterrahmenverhältnis des primären Komponententrägers und einem Unterrahmenverhältnis des sekundären Komponententrägers, wobei der Unterrahmen-Versatzumfang eine Größenordnung von N Unterrahmen ist, der Unterrahmen-Versatzumfang nicht gleich einem ganzzahligen Mehrfachen einer Periode des Unterrahmenverhältnisses des sekundären Komponententrägers ist und N eine positive Ganzzahl größer als oder gleich 1 ist;
und
Auslegen des sekundären Komponententrägers durch die Basisstation für jedes Benutzer-Equipment, UE, in einer Gruppe ersten Benutzer-Equipments, UE, innerhalb eines Abdeckungsbereichs der Basisstation und Senden von Konfigurationsinformation zu jedem UE in der ersten UE-Gruppe, wobei die Konfigurationsinformation umfasst: eine Frequenz des sekundären Komponententrägers und den Unterrahmen-Versatzumfang des sekundären Komponententrägers.

2. Verfahren nach Anspruch 1, wobei das Verfahren ferner umfasst:
Festlegen, durch die Basisstation entsprechend einem Uplink-Verkehrsvolumen und/oder einem Downlink-Verkehrsvolumen, den Unterrahmen-Versatzumfang des sekundären Komponententrägers einzustellen;
Festlegen, durch die Basisstation, eines Unterrahmen-Versatzumfangs, mit dem der sekundäre Komponententräger eingestellt werden soll;
Senden, durch die Basisstation, einer Konfigurationslöschanweisung für den sekundären Komponententräger zu jedem UE in der ersten UE-Gruppe, wobei die Konfigurationslöschanweisung dafür verwendet wird, jedes UE in der ersten UE-Gruppe zum Löschen von Konfiguration des sekundären Komponententrägers anzuweisen;
Übergabe, durch die Basisstation, von UE, das in einer dritten UE-Gruppe ist und das auf dem sekundären Komponententräger zu einem anderen Träger verweilt, wobei das UE in der dritten UE-Gruppe UE ist, das den sekundären Komponententräger als einen primären Komponententräger nutzt;
Neuauslegen, durch die Basisstation, des sekundären Komponententrägers für jedes UE in der ersten UE-Gruppe entsprechend dem Unterrahmen-Versatzumfang, mit dem der sekundäre Komponententräger eingestellt werden soll, und Senden aktualisierter Trägerinformation zu jedem UE in der ersten UE-Gruppe und jedem UE in der dritten UE-Gruppe, wobei die aktualisierte Trägerinformation umfasst:
eine Frequenz des sekundären Komponententrägers, das Unterrahmenverhältnis des sekundären Komponententrägers und den Unterrahmen-Versatzumfang, mit dem der sekundäre Komponententräger eingestellt werden soll;
Empfangen, durch die Basisstation, eines Messergebnisses, das für den sekundären Komponententräger gilt und das von jedem UE in der dritten UE-Gruppe gesendet wird, wobei das Messergebnis zum sekundären Komponententräger von jedem UE in der dritten UE-Gruppe erhalten wird durch Durchführen einer Messung entsprechend der aktualisierten Trägerinformation; und
Festlegen durch die Basisstation entsprechend dem Messergebnis, das für den sekundären Komponententräger gilt und das von jedem UE in der dritten UE-Gruppe gesendet wird, ob jede UE in der dritten UE-Gruppe von dem anderen Träger zum sekundären Komponententräger übergeben werden soll, und Übergeben eines UE, das in der dritten UE-Gruppe ist und das zum sekundären Komponententräger übergeben werden soll.

3. Verfahren nach Anspruch 1 oder 2, wobei das Verfahren ferner umfasst:
Festlegen, durch die Basisstation, von Trägern, die durch das erste UE aktiviert worden sind, wobei das erste UE ein beliebiges UE in der ersten UE-Gruppe ist;
Festlegen, durch die Basisstation aus den aktivierten Trägern, von gebündelten Unterrahmen von mindestens zwei für gebündelte Übertragung verwendeten Trägern, wobei die gebündelten Unterrahmen aufeinanderfolgende Unterrahmen der mindestens zwei für die gebündelte Übertragung verwendeten Träger sind und die gebündelten Unterrahmen zum Übertragen gleicher Daten verwendet werden; und
Senden, durch die Basisstation, von Konfigurationsinformation der gebündelten Übertragung zum ersten UE, sodass das erste UE die gebündelte Übertragung entsprechend der Konfigurationsinformation der gebündelten Übertragung durchführt, wobei die Konfigurationsinformation der gebündelten Übertragung umfasst: die mindestens zwei für die gebündelte Übertragung verwendeten Träger, einen Ressourcenblock, der in den mindestens zwei für die gebündelte Übertragung verwendeten Trägern vorliegt und der in der gebündelten Übertragung verwendet wird, Sequenznummern der gebündelten Unterrahmen und eine Zeitplanungsweise der gebündelten Übertragung.

4. Verfahren nach Anspruch 1, wobei das Verfahren vor dem Auslegen des sekundären Komponententrägers für jedes UE in einer ersten Benutzer-Equipment-, UE-, - Gruppe innerhalb eines Abdeckungsbereichs der Basisstation ferner umfasst:
Broadcasting, durch die Basisstation, der Frequenz, des Unterrahmenverhältnisses und des Unterrahmen-Versatzumfangs des sekundären Komponententrägers an alle UEs innerhalb des Abdeckungsbereichs der Basisstation unter Verwendung des sekundären Komponententrägers;
Festlegen, durch die Basisstation, einer zweiten UE-Gruppe aus allen einer vorgegebenen Auswahlbedingung entsprechenden UEs und Senden einer Messanweisung an jedes UE in der zweiten UE-Gruppe, wobei die Messeanweisung verwendet wird, um jedes UE in der zweiten UE-Gruppe zum Messen des sekundären Komponententrägers anzuweisen;
Empfangen eines Messergebnisses durch die Basisstation, das für den sekundären Komponententräger gilt und das von jedem UE in der zweiten UE-Gruppe zurückgeleitet wird; und
Festlegen, durch die Basisstation, von UEs aus der zweiten UE-Gruppe, deren Messergebnis einer vorgegebenen Bedingung entspricht, entsprechend dem Messergebnis, das für den sekundären Komponententräger gilt und das von jedem UE in der zweiten UE-Gruppe zurückgeleitet wird, und Bilden der ersten UE-Gruppe unter Verwendung des UE, dessen Messergebnis die vorgegebenen Bedingung erfüllt.

5. Verfahren nach Anspruch 1, wobei der Unterrahmen-Versatzumfang des sekundären Komponententrägers der gleiche ist wie ein Unterrahmen-Versatzumfang eines anderen sekundären Komponententrägers des primären Komponententrägers.

6. Verfahren nach Anspruch 1, wobei sich der Unterrahmen-Versatzumfang des sekundären Komponententrägers von einem Unterrahmen-Versatzumfang eines anderen sekundären Komponententrägers des primären Komponententrägers unterscheidet.

7. Verfahren nach Anspruch 1, wobei das Unterrahmenverhältnis des sekundären Komponententrägers das gleiche ist wie das Unterrahmenverhältnis des primären Komponententrägers und ein Unterrahmenverhältnis eines anderen sekundären Komponententrägers des primären Komponententrägers.

8. Verfahren nach Anspruch 1, wobei sich das Unterrahmenverhältnis des sekundären Komponententrägers von dem Unterrahmenverhältnis des primären Komponententrägers und einem Unterrahmenverhältnis eines anderen sekundären Komponententrägers des primären Komponententrägers unterscheidet.

9. Basisstation, umfassend:
ein Bestimmungsmodul, ausgelegt zum Festlegen des Hinzufügens eines sekundären Komponententrägers, wobei
das Bestimmungsmodul ferner ausgelegt ist zum Festlegen, einen Unterrahmen des sekundären Komponententrägers zu versetzen, und zum Festlegen eines Unterrahmen-Versatzumfangs des sekundären Komponententrägers relativ zu einem primären Komponententräger entsprechend einem Unterrahmenverhältnis des primären Komponententrägers und einem Unterrahmenverhältnis des sekundären Komponententrägers, wobei der Unterrahmen-Versatzumfang eine Größenordnung von N Unterrahmen ist, der Unterrahmen-Versatzumfang nicht gleich einem ganzzahligen Mehrfachen einer Periode des Unterrahmenverhältnisses des sekundären Komponententrägers ist und N eine positive Ganzzahl größer als oder gleich 1 ist;
ein Konfigurationsmodul, ausgelegt zum Auslegen des sekundären Komponententrägers für jedes Benutzer-Equipment, UE, in einer ersten Benutzer-Equipment-, UE-, -Gruppe innerhalb eines Abdeckungsbereichs der Basisstation; und
ein Sendemodul, ausgelegt zum Senden von Konfigurationsinformation zu jedem UE in der ersten UE-Gruppe, wobei die Konfigurationsinformation umfasst: eine Frequenz des sekundären Komponententrägers, das Unterrahmenverhältnis des zweiten Komponententrägers und den Unterrahmen-Versatzumfang des sekundären Komponententrägers.

10. Basisstation nach Anspruch 9, wobei das Bestimmungsmodul ferner ausgelegt ist zum
Festlegen entsprechend einem Uplink-Verkehrsvolumen und/oder einem Downlink-Verkehrsvolumen, den Unterrahmen-Versatzumfang des sekundären Komponententrägers einzustellen; und
Festlegen eines Unterrahmen-Versatzumfangs, mit dem der sekundäre Komponententräger eingestellt werden soll;
das Sendemodul ferner ausgelegt ist zum Senden einer Konfigurationslöschanweisung für den sekundären Komponententräger zu jedem UE in der ersten UE-Gruppe, wobei die Konfigurationslöschanweisung dafür verwendet wird, jedes UE in der ersten UE-Gruppe zum Löschen von Konfiguration des sekundären Komponententrägers anzuweisen;
die Basisstation ferner ein Übergabemodul umfasst, ausgelegt zum Übergeben von UE, das in einer dritten UE-Gruppe ist und das auf dem sekundären Komponententräger zu einem anderen Träger verweilt, wobei das UE in der dritten UE-Gruppe UE ist, das den sekundären Komponententräger als einen primären Komponententräger nutzt;
das Konfigurationsmodul ferner ausgelegt ist zum Neuauslegen des sekundären Komponententrägers für jedes UE in der ersten UE-Gruppe entsprechend dem Unterrahmen-Versatzumfang, mit dem der sekundäre Komponententräger eingestellt werden soll;
das Sendemodul ferner ausgelegt ist zum Senden aktualisierter Trägerinformation zu jedem UE in der ersten UE-Gruppe und jedem UE in der dritten UE-Gruppe, wobei die aktualisierte Trägerinformation umfasst: die Frequenz des sekundären Komponententrägers, das Unterrahmenverhältnis des sekundären Komponententrägers und den Unterrahmen-Versatzumfang, mit dem der sekundäre Komponententräger eingestellt werden soll;
die Basisstation ferner umfasst: ein Empfangsmodul, ausgelegt zum Empfangen eines Messergebnisses, das für den sekundären Komponententräger gilt und das von jedem UE in der dritten UE-Gruppe gesendet wird, wobei das Messergebnis zum sekundären Komponententräger von jedem UE in der dritten UE-Gruppe erhalten wird durch Durchführen einer Messung entsprechend der aktualisierten Trägerinformation; und
das Übergabemodul ferner ausgelegt ist zum Festlegen entsprechend dem Messergebnis, das für den sekundären Komponententräger gilt und das von jedem UE in der dritten UE-Gruppe gesendet wird, ob jede UE in der dritten UE-Gruppe von dem anderen Träger zum sekundären Komponententräger übergeben werden soll, und Übergeben eines UE, das in der dritten UE-Gruppe ist und das zum sekundären Komponententräger übergeben werden soll.

11. Basisstation nach Anspruch 9 oder 10, wobei das Bestimmungsmodul ferner ausgelegt ist zum
Ermitteln von Trägern, die durch erstes UE aktiviert worden sind, wobei das erste UE ein beliebiges UE in der ersten UE-Gruppe ist; und
Festlegen, aus den aktivierten Trägern, von gebündelten Unterrahmen von mindestens zwei für gebündelte Übertragung verwendeten Trägern, wobei die gebündelten Unterrahmen aufeinanderfolgende Unterrahmen der mindestens zwei für die gebündelte Übertragung verwendeten Trägern sind und die gebündelten Unterrahmen zum Übertragen gleicher Daten verwendet werden; und
das Sendemodul ferner ausgelegt ist zum Senden von Konfigurationsinformation der gebündelten Übertragung zum ersten UE, sodass das erste UE die gebündelte Übertragung entsprechend der Konfigurationsinformation der gebündelten Übertragung durchführt, wobei die Konfigurationsinformation der gebündelten Übertragung umfasst: die mindestens zwei für die gebündelte Übertragung verwendeten Träger, einen Ressourcenblock, der in den mindestens zwei für die gebündelte Übertragung verwendeten Trägern vorliegt und der in der gebündelten Übertragung verwendet wird, Sequenznummern der gebündelten Unterrahmen und eine Zeitplanungsweise der gebündelten Übertragung.

12. Basisstation nach Anspruch 9, wobei das Sendemodul ferner dafür ausgelegt ist, bevor das Konfigurationsmodul den sekundären Komponententräger für jedes UE in der ersten UE-Gruppe innerhalb des Abdeckungsbereichs der Basisstation einrichtet, die Frequenz, das Unterrahmenverhältnis und den Unterrahmen-Versatzumfang des sekundären Komponententrägers mittels Broadcast zu allen UEs innerhalb des Abdeckungsbereichs der Basisstation unter Verwendung des sekundären Komponententrägers zu senden;
das Bestimmungsmodul ferner ausgelegt ist zum Festlegen einer zweiten UE-Gruppe aus allen UEs entsprechend einer vorgegebenen Auswahlbedingung;
das Sendemodul ferner ausgelegt ist zum Senden einer Messanweisung zu jedem UE in der zweiten UE-Gruppe, wobei die Messanweisung verwendet wird, um jedes UE in der zweiten UE-Gruppe anzuweisen, den sekundären Komponententräger zu messen;
die Basisstation ferner umfasst:
ein Empfangsmodul, ausgelegt zum Empfangen eines Messergebnisses, das für den sekundären Komponententräger gilt und das von jedem UE in der zweiten UE-Gruppe zurückgeleitet wird;
und
das Bestimmungsmodul ferner ausgelegt ist zum Festlegen von UE, dessen Messergebnis eine vorgegebene Bedingung erfüllt, aus der zweiten UE-Gruppe entsprechend dem Messergebnis, das für den sekundären Komponententräger gilt und das von jedem UE in der zweiten UE-Gruppe zurückgeleitet wird, und zum Bilden der ersten UE-Gruppe unter Verwendung des UE, dessen Messergebnis die vorgegebene Bedingung erfüllt.

13. Basisstation nach Anspruch 9, wobei der Unterrahmen-Versatzumfang des sekundären Komponententrägers der gleiche ist wie ein Unterrahmen-Versatzumfang eines anderen sekundären Komponententrägers des primären Komponententrägers.

14. Basisstation nach Anspruch 9, wobei sich der Unterrahmen-Versatzumfang des sekundären Komponententrägers von einem Unterrahmen-Versatzumfang eines anderen sekundären Komponententrägers des primären Komponententrägers unterscheidet.

15. Rechnerprogramm, umfassend Anweisungen, die bei Ausführung des Programms durch einen Prozessor einer Basisstation den Prozessor zum Durchführen der Schritte des Verfahrens nach einem der Ansprüche 1 bis 8 veranlassen.

## Revendications

1. Procédé d'agrégation de porteuses basé sur le décalage de sous-trame, comprenant :
la détermination, par une station de base, d'ajouter une composante porteuse secondaire ;
la détermination, par la station de base, de décaler une sous-trame de la composante porteuse secondaire, ledit procédé étant **caractérisé par** :
la détermination, par la station de base, d'une quantité de décalage de sous-trame de la composante porteuse secondaire par rapport à une composante porteuse primaire en fonction d'un rapport de sous-trame de la composante porteuse primaire et d'un rapport de sous-trame de la composante porteuse secondaire, dans lequel la quantité de décalage de sous-trame est une grandeur de N sous-trames, la quantité de décalage de sous-trame n'est pas égale à un multiple entier d'une période du rapport de sous-trame de la composante porteuse secondaire, et N est un entier positif supérieur ou égal à 1 ; et
la configuration, par la station de base, de la composante porteuse secondaire pour chaque équipement d'utilisateur, UE, dans un premier ensemble d'équipements d'utilisateurs UE à l'intérieur d'une zone de couverture de la station de base, et l'envoi d'informations de configuration à chaque UE du premier ensemble d'UE, dans lequel les informations de configuration comprennent : une fréquence de la composante porteuse secondaire, le rapport de sous-trame de la composante porteuse secondaire et la quantité de décalage de sous-trame de la composante porteuse secondaire.

2. Procédé selon la revendication 1, comprenant en outre :
la détermination, par la station de base, en fonction d'un volume de trafic en liaison montante et/ou d'un volume de trafic en liaison descendante, d'ajuster la quantité de décalage de sous-trame de la composante porteuse secondaire ;
la détermination, par la station de base, d'une quantité de décalage de sous-trame selon laquelle la composante porteuse secondaire doit être ajustée ;
l'envoi, par la station de base, d'une instruction de suppression de configuration pour la composante porteuse secondaire à chaque UE du premier ensemble d'UE, dans lequel l'instruction de suppression de configuration est utilisée pour donner l'instruction à chaque UE du premier ensemble d'UE de supprimer la configuration de la composante porteuse secondaire ;
le transfert, par la station de base, de l'UE qui se trouve dans un troisième ensemble d'UE et qui attend sur la composante porteuse secondaire, à une autre porteuse, dans lequel l'UE dans le troisième ensemble d'UE est l'UE qui utilise la composante porteuse secondaire comme composante porteuse primaire ;
la reconfiguration, par la station de base, de la composante porteuse secondaire pour chaque UE du premier ensemble d'UE en fonction de la quantité de décalage de sous-trame selon laquelle la composante porteuse secondaire doit être ajustée, et l'envoi d'informations de porteuse mises à jour à chaque UE du premier ensemble d'UE et à chaque UE du troisième ensemble d'UE, dans lequel les informations de porteuse mises à jour comprennent : la fréquence de la composante porteuse secondaire, le rapport de sous-trame de la composante porteuse secondaire et la quantité de décalage de sous-trame selon laquelle la composante porteuse secondaire doit être ajustée ;
la réception, par la station de base, d'un résultat de mesure qui est relatif à la composante porteuse secondaire et qui est envoyé par chaque UE du troisième ensemble d'UE, dans lequel le résultat de mesure relatif à la composante porteuse secondaire est obtenu par chaque UE du troisième ensemble d'UE par l'exécution d'une mesure en fonction des informations de porteuse mises à jour ; et
la détermination, par la station de base en fonction du résultat de mesure qui est relatif à la composante porteuse secondaire et qui est envoyé par chaque UE du troisième ensemble d'UE, de transférer ou non chaque UE du troisième ensemble d'UE depuis l'autre porteuse vers la composante porteuse secondaire, et le transfert de l'UE qui se trouve dans le troisième ensemble d'UE et qui doit être transféré à la composante porteuse secondaire.

3. Procédé selon la revendication 1 ou 2, comprenant en outre :
la détermination, par la station de base, de porteuses qui ont été activées par le premier UE, dans lequel le premier UE est un quelconque UE du premier ensemble d'UE;
la détermination, par la station de base parmi les porteuses activées, de sous-trames regroupées d'au moins deux porteuses utilisées pour une transmission regroupée, dans lequel les sous-trames regroupées sont des sous-trames consécutives des au moins deux porteuses utilisées pour la transmission regroupée, et les sous-trames regroupées sont utilisées pour transmettre les mêmes données ; et
l'envoi, par la station de base, d'informations de configuration de la transmission regroupée au premier UE, de sorte que le premier UE exécute la transmission regroupée en fonction des informations de configuration de la transmission regroupée, dans lequel les informations de configuration de la transmission regroupée comprennent : les au moins deux porteuses utilisées pour la transmission regroupée, un bloc de ressource qui se trouve dans les au moins deux porteuses utilisées pour la transmission regroupée et qui est utilisé dans la transmission regroupée, les numéros de séquence des sous-trames regroupées et une planification de la transmission regroupée.

4. Procédé selon la revendication 1, comprenant en outre, avant la configuration, par la station de base, de la composante porteuse secondaire pour chaque UE dans un premier ensemble d'équipements d'utilisateurs UE à l'intérieur d'une zone de couverture de la station de base :
la diffusion, par la station de base, de la fréquence, du rapport de sous-trame et de la quantité de décalage de sous-trame de la composante porteuse secondaire à tous les UE à l'intérieur de la zone de couverture de la station de base au moyen de la composante porteuse secondaire ;
la détermination, par la station de base, d'un deuxième ensemble d'UE parmi tous les UE en fonction d'une condition de sélection prédéfinie, et l'envoi d'une instruction de mesure à chaque UE dans le deuxième ensemble d'UE, dans lequel l'instruction de mesure est utilisée pour donner l'instruction à chaque UE du deuxième ensemble d'UE de mesurer la composante porteuse secondaire ;
la réception, par la station de base, d'un résultat de mesure qui est relatif à la composante porteuse secondaire et qui est retourné par chaque UE du deuxième ensemble d'UE ; et
la détermination, par la station de base à partir du deuxième ensemble d'UE en fonction du résultat de mesure qui est relatif à la composante porteuse secondaire, et qui est retourné par chaque UE du deuxième ensemble d'UE, de l'UE dont le résultat de mesure satisfait à une condition prédéfinie, et la formation du premier ensemble d'UE au moyen de l'UE dont le résultat de mesure satisfait à la condition prédéfinie.

5. Procédé selon la revendication 1, dans lequel la quantité de décalage de sous-trame de la composante porteuse secondaire est la même qu'une quantité de décalage de sous-trame d'une autre composante porteuse secondaire de la composante porteuse primaire.

6. Procédé selon la revendication 1, dans lequel la quantité de décalage de sous-trame de la composante porteuse secondaire est différente d'une quantité de décalage de sous-trame d'une autre composante porteuse secondaire de la composante porteuse primaire.

7. Procédé selon la revendication 1, dans lequel le rapport de sous-trame de la composante porteuse secondaire est le même que le rapport de sous-trame de la composante porteuse primaire et qu'un rapport de sous-trame d'une autre composante porteuse secondaire de la composante porteuse primaire.

8. Procédé selon la revendication 1, dans lequel le rapport de sous-trame de la composante porteuse secondaire est différent du rapport de sous-trame de la composante porteuse primaire et du rapport de sous-trame d'une autre composante porteuse secondaire de la composante porteuse primaire.

9. Station de base comprenant :
un module de détermination, configuré pour déterminer l'ajout d'une composante porteuse secondaire, dans lequel
le module de détermination est en outre configuré pour : déterminer le décalage d'une sous-trame de la composante porteuse secondaire, et déterminer une quantité de décalage de sous-trame de la composante porteuse secondaire par rapport à une composante porteuse primaire en fonction d'un rapport de sous-trame de la composante porteuse primaire et d'un rapport de sous-trame de la composante porteuse secondaire, dans laquelle la quantité de décalage de sous-trame est une grandeur de N sous-trames, la quantité de décalage de sous-trame n'est pas égale à un multiple entier d'une période du rapport de sous-trame de la composante porteuse secondaire, et N est un entier positif supérieur ou égal à 1 ;
un module de configuration, configuré pour configurer la composante porteuse secondaire pour chaque équipement d'utilisateur, UE, d'un premier ensemble d'équipements d'utilisateurs UE à l'intérieur d'une zone de couverture de la station de base ; et
un module d'envoi, configuré pour envoyer des informations de configuration à chaque UE du premier ensemble d'UE, dans laquelle les informations de configuration comprennent : une fréquence de la composante porteuse secondaire, le rapport de sous-trame de la composante porteuse secondaire et la quantité de décalage de sous-trame de la composante porteuse secondaire.

10. Station de base selon la revendication 9, dans laquelle le module de détermination est en outre configuré pour :
déterminer, en fonction d'un volume de trafic en liaison montante et/ou d'un volume de trafic en liaison descendante, d'ajuster la quantité de décalage de sous-trame de la composante porteuse secondaire ; et
déterminer une quantité de décalage de sous-trame selon laquelle la composante porteuse secondaire doit être ajustée ;
le module d'envoi est en outre configuré pour envoyer une instruction de suppression de configuration pour la composante porteuse secondaire à chaque UE du premier ensemble d'UE, dans laquelle l'instruction de suppression de configuration est utilisée pour donner l'instruction à chaque UE du premier ensemble d'UE de supprimer la configuration de la composante porteuse secondaire ;
la station de base comprenant en outre un module de transfert, configuré pour transférer l'UE qui se trouve dans un troisième ensemble d'UE et qui attend sur la composante porteuse secondaire à une autre porteuse, dans laquelle l'UE du troisième ensemble d'UE est l'UE qui utilise la composante porteuse secondaire comme composante porteuse primaire ;
le module de configuration est en outre configuré pour reconfigurer la composante porteuse secondaire pour chaque UE du premier ensemble d'UE en fonction de la quantité de décalage de trame selon laquelle la composante porteuse secondaire doit être ajustée ;
le module d'envoi est en outre configuré pour envoyer des informations de porteuse mises à jour à chaque UE du premier ensemble d'UE et à chaque UE du troisième ensemble d'UE, dans laquelle les informations de porteuse mises à jour comprennent : la fréquence de la composante porteuse secondaire, le rapport de sous-trame de la composante porteuse secondaire et la quantité de décalage de trame selon laquelle la composante porteuse secondaire doit être ajustée ;
la station de base comprenant en outre : un module de réception, configuré pour recevoir un résultat de mesure qui est relatif à la composante porteuse secondaire et qui est envoyé par chaque UE du troisième ensemble d'UE, dans laquelle le résultat de mesure relatif à la composante porteuse secondaire est obtenu par chaque UE dans le troisième ensemble d'UE par l'exécution d'une mesure en fonction des informations de porteuse mises à jour ; et
le module de transfert est en outre configuré pour : déterminer, en fonction du résultat de mesure qui est relatif à la composante porteuse secondaire et qui est envoyé par chaque UE du troisième ensemble d'UE, de transférer ou non chaque UE du troisième ensemble d'UE depuis l'autre composante porteuse à la composante porteuse secondaire, et transférer l'UE qui se trouve dans le troisième ensemble d'UE et qui doit être transféré à la composante porteuse secondaire.

11. Station de base selon la revendication 9 ou 10, dans laquelle le module de détermination est en outre configuré pour :
déterminer les porteuses qui ont été activées par le premier UE, dans laquelle le premier UE est un UE quelconque du premier ensemble d'UE ; et
déterminer, parmi les porteuses activées, des sous-trames regroupées d'au moins deux porteuses utilisées pour une transmission regroupée, dans laquelle les sous-trames regroupées sont des sous-trames consécutives des au moins deux porteuses utilisées pour la transmission regroupée, et les sous-trames regroupées sont utilisées pour transmettre les mêmes données ; et
le module d'envoi est en outre configuré pour envoyer des informations de configuration de la transmission regroupée au premier UE de sorte que le premier UE exécute la transmission regroupée en fonction des informations de configuration de la transmission regroupée, dans laquelle les informations de configuration de la transmission regroupée comprennent : les au moins deux porteuses utilisées pour la transmission regroupée, un bloc de ressource qui se trouve dans les au moins deux porteuses utilisées pour la transmission regroupée et qui est utilisé dans la transmission regroupée, les numéros de séquence des sous-trames regroupées et une planification de la transmission regroupée.

12. Station de base selon la revendication 9, dans laquelle le module d'envoi est en outre configuré pour :
avant que le module de configuration configure la composante porteuse secondaire pour chaque UE du premier ensemble d'UE à l'intérieur de la zone de couverture de la station de base, diffuser la fréquence, le rapport de sous-trame et la quantité de décalage de sous-trame de la composante porteuse secondaire à tous les UE à l'intérieur de la zone de couverture de la station de base au moyen de la composante porteuse secondaire ;
le module de détermination étant en outre configuré pour déterminer un deuxième ensemble d'UE parmi tous les UE en fonction d'une condition de sélection prédéfinie ;
le module d'envoi étant en outre configuré pour envoyer une instruction de mesure à chaque UE du deuxième ensemble d'UE, dans laquelle l'instruction de mesure est utilisée pour donner l'instruction à chaque UE du deuxième ensemble d'UE de mesurer la composante porteuse secondaire ;
la station de base comprenant en outre :
un module de réception, configuré pour recevoir un résultat de mesure qui est relatif à la composante porteuse secondaire et qui est retourné par chaque UE du deuxième ensemble d'UE ; et
le module de détermination étant en outre configuré pour : déterminer, à partir du deuxième ensemble d'UE en fonction du résultat de mesure qui est relatif à la composante porteuse secondaire et qui est retourné par chaque UE du deuxième ensemble d'UE, l'UE dont le résultat de mesure satisfait à une condition prédéfinie, et former le premier UE au moyen de l'UE dont le résultat de mesure satisfait à la condition prédéfinie.

13. Station de base selon la revendication 9, dans laquelle la quantité de décalage de sous-trame de la composante porteuse secondaire est la même qu'une quantité de décalage de sous-trame d'une autre composante porteuse secondaire de la composante porteuse primaire.

14. Station de base selon la revendication 9, dans laquelle la quantité de décalage de sous-trame de la composante porteuse secondaire est différente d'une quantité de décalage de sous-trame d'une autre composante porteuse secondaire de la composante porteuse primaire.

15. Programme informatique comprenant des instructions qui, lorsque le programme est exécuté par un processeur d'une station de base, amènent ledit processeur à exécuter les étapes du procédé selon l'une quelconque des revendications 1 à 8.
